# EUROPEAN PATENT SPECIFICATION

(11) **EP 3 279 017 B1**
(45) Date of publication and mention of the grant of the patent: **07.10.2020**
(21) Application number: 16465524.3
(22) Date of filing: 05.08.2016
(51) Int. Cl.: B60H 1/00, B60W 30/06, G08G 1/16, G08G 1/14

(54) **HEAT PROTECTION DEVICE FOR A VEHICLE**
WÄRMESCHUTZVORRICHTUNG FÜR EIN FAHRZEUG
DISPOSITIF DE PROTECTION CONTRE LA CHALEUR POUR UN VÉHICULE

(43) Date of publication of application: 07.02.2018
(73) Proprietor: Continental Automotive GmbH, 30165 Hannover (DE)
(72) Inventor: Homutescu, Adrian, 700013 Iasi (RO)

(56) References cited:
- DE-A1- 10 248 003
- DE-A1- 19 753 884
- DE-A1-102009 007 521
- DE-A1-102009 057 647
- DE-A1-102010 054 081
- DE-A1-102013 211 162
- DE-A1-102014 001 554
- KR-B1- 100 980 660

## Description

### Field of the invention

The invention generally relates to the field of assistance systems for a vehicle. Particularly, the invention relates to a protection device against undesired temperature changes for a vehicle further on referred to as heat protection device, to a vehicle comprising such heat protection device and to a method for displacing a parked vehicle.

### Background of the invention

Modern vehicles, such as cars, busses, trucks or trains are usually equipped with a comprehensive assistance system assisting for instance a driver of the vehicle in controlling the vehicle.

These assistance systems may comprise various sensors for detecting, measuring and/or monitoring values of various parameters. Further, the assistance systems may comprise a control device for processing and/or evaluating the detected values of the parameters in order to decide for an appropriate response.

The Korean Patent KR 100 980 660 B1 describes a parking guide method and a vehicle control system to maintain proper temperature in a vehicle by finding a parking location based on the weather information of the current location of a vehicle.

### Summary of the invention

It is an objective of the invention to provide a comprehensive heat protection device for a vehicle like a motor vehicle, a car, a bus and/or a truck.

This objective is achieved by the subject matter of the independent claims. Further exemplary embodiments are evident from the dependent claims and the following description.

According to a first aspect of the invention a heat protection device for a parked vehicle is provided. The vehicle may particularly relate to an unmanned parked vehicle. The heat protection device comprises a sensor arrangement with a first temperature sensor and a second temperature sensor. The heat protection device further comprises a control device, particularly for processing temperature values of the sensor arrangement. The first temperature sensor is configured to determine and/or measure a first temperature value at a first location of the vehicle, and the second temperature sensor is configured to determine and/or measure a second temperature value at a second location of the vehicle, wherein the control device is configured to determine a temperature difference based on the first temperature value and the second temperature value and a temperature distribution over an outer surface of the vehicle (100) based on the first temperature value and the second temperature value. Further on, the control device is configured to determine a displacement maneuver for displacing the parked vehicle (100) based on the determined temperature distribution, in order to reduce the determined temperature difference and to automatically displace the vehicle (100) according to the determined displacement maneuver.

Rephrasing the first aspect of the invention, the heat protection device is configured to monitor temperature values provided by the sensor arrangement with the first and second temperature sensors. The first temperature value of the first temperature sensor and the second temperature value of the second temperature sensor may be processed and/or evaluated with respect to each other, e.g. by subtraction of the respective values or any other mathematical processing, in order to determine the temperature difference and/or a temperature difference value between the first and the second temperature values. The temperature difference may in this context relate to a temperature gradient of the first temperature value and the second temperature value. This temperature difference and/or gradient may for instance be caused by sunlight irradiating only a part of the vehicle thereby increasing a temperature of the vehicle in a region, in which one of the temperature sensors is arranged. Based on a determined temperature distribution over an outer surface of the vehicle based on the first temperature value and the second temperature value the control device decides whether it may be advantageous to displace the vehicle in order to reduce the temperature difference and/or in order to compensate the temperature difference. For this purpose, the heat protection device is configured to determine the displacement maneuver, which may comprise a direction and/or a distance the vehicle is to be moved and/or displaced in order to reduce the temperature difference in such a way as to bring the disadvantageous temperature value as close as possible to the advantageous temperature value. For instance, the first temperature sensor may be arranged at a front part and the second temperature sensor may be arranged at a rear part of the vehicle. If the first temperature value is lower than the second temperature value, it may be assumed that the vehicle is exposed to sunlight and/or other source of undesired heat at the rear part, i.e. near the second temperature sensor. By displacing the vehicle in a forward direction by a certain distance the vehicle may be moved out of the direct sunlight and into a shadow of an obstacle thereby reducing the temperature difference. This way, a most convenient position and/or location of the vehicle available for staying away from direct sunlight may be automatically determined by the heat protection device. Particularly during summertime this may be advantageous in terms of increasing a comfort for a driver of the vehicle when returning to the vehicle. Also cost for ventilation and/or for air condition may be saved, which in turn may save fuel and/or reduce CO₂ emission.

Embodiments of the invention may be regarded as being based on thoughts and findings described in the following. During summertime vehicles may be parked by owners and/or drivers preferably in the shadow, which may be provided by any kind of sun blocker, such as e.g. a building, a tree or any other obstacle. Reflective blockers may be stuck inside the vehicle e.g. on the inside of windows of the vehicle. However, as shadows change during the day due to the Earth's rotation, the vehicle may become exposed to the Sun and an overall or average temperature of the vehicle may be increased. As a driver of the vehicle returns to the parked vehicle after a certain period of time, the Sun may have raised the overall car temperature consistently, therefore the driver and/or passengers may experience a thermal discomfort. Further, ventilation may be required before driving away, which in turn may imply wasted time for the driver and passengers to wait. Further, the ventilation may imply additional energy consumption for air conditioning, discomfort and diminished driver reaction to stimuli due to heat and/or sweat. Apart from that, due to higher temperature variation of a daily cycle, the lifetime of components of the vehicle may be diminished. By means of the heat protection device all the above-mentioned drawbacks may be overcome by maintaining the most convenient position of the vehicle available from a thermal point of view. Such most convenient position may e.g. be shadow during summertime, thereby lowering the overall temperature of the vehicle. Vice versa, during wintertime, the most convenient position may refer to a position, in which the vehicle is exposed to sunlight, such that the overall temperature is increased, which may save energy for heating the vehicle and/or prevent creation of ice on windows and/or the wind shield of the vehicle.

This way, the heat protection device provides means for decreasing the daily temperature variation of a parked vehicle, thus expanding the lifetime of components of the vehicle. Further, by means of the heat protection device a comfort for a driver and/or passengers may be increased, energy to heat or cool down the vehicle may be reduced, and fuel consumption and CO₂ emission may be lowered.

According to an embodiment, the maneuver is determined such that an average temperature of the vehicle is increased or reduced. This may mean that the acquiring of energy through heat, from the environment, by the vehicle, may be prevented or, respectively, triggered. As a consequence, the average temperature of the vehicle may be reduced or, respectively, increased. The average temperature may refer to an overall temperature of the vehicle. For instance, during summertime and/or periods of rather high outside temperature, it may be advantageous to reduce the average temperature of the vehicle and determine the maneuver accordingly. In contrast, during wintertime and/or periods of rather low outside temperature, it may be advantageous to increase the average temperature and determine the maneuver accordingly. In other words, the maneuver may be determined such that the most advantageous parking position, from a thermal point of view, may be determined and/or chosen.

According to the invention, the control device is configured to automatically displace the vehicle according to the determined displacement maneuver. This may comprise starting an engine of the vehicle and moving the vehicle according to the determined maneuver, i.e. by a certain distance and/or in a certain direction associated with the determined maneuver. Accordingly, the heat protection device and/or the control device is configured to take over a control of the either unmanned or manned parked vehicle and bring it to another position which is more suitable from a thermal point of view. The vehicle may be moved in one step or several steps.

The control device is further configured to determine a temperature distribution over an outer surface of the vehicle based on the first temperature value and the second temperature value, wherein the control device is configured to determine the maneuver based on the determined temperature distribution. For instance, a temperature mesh over the outer surface may be determined, e.g. by extrapolating and/or interpolating the first and second temperature values. This may allow to precisely determine a direction, in which the vehicle is to be moved in order to reduce or increase the average temperature of the vehicle.

According to an embodiment of the invention, the heat protection device further comprises a communication device for communicating with a further vehicle, wherein the control device is configured to transmit data associated with the maneuver to the further vehicle via the communication device. The further vehicle may also be a parked and unmanned vehicle. The data may e.g. comprise a request for performing the displacement maneuver as well as a direction and a distance the vehicle is to be moved. The data may also comprise coordinates to which the further vehicle is to be moved. The communication device may e.g. refer to an inter-vehicle communication device, such as a vehicle-to-vehicle and/or a car-to-car communication device, which may be based on a wireless communication link between at least two vehicles, such as WLAN (Wireless Local Area Networks). Apart from data associated with the maneuver, also the first and second temperature values may be transmitted to the further vehicle via the communication device. Further, the control device may be configured for receiving, via the communication device, data associated with a maneuver and/or temperature values by the further vehicle. This may provide a comprehensive information exchange between the vehicle and the further vehicle.

According to an an embodiment not being part of the invention, the control device is configured to instruct and/or request the further vehicle via the communication device to perform the maneuver. For instance, the further vehicle may block a way of the vehicle preventing it from performing the maneuver. By communicating the data associated with the maneuver, the vehicle and the further vehicle may both be moved by a certain distance in a certain direction. This may allow the vehicle to be moved to a thermally convenient position even if its way is initially blocked by the further vehicle. The data associated with the maneuver may also be communicated to a plurality of further vehicles and all these further vehicles may be moved according to the determined maneuver. Accordingly, the heat protection device may be configured to exchange the data associated with the maneuver between vehicles parked in a specific area that would enable, thanks to shared, sensor-collected data (i.e. the temperature values), to assess the best parking position of an entire vehicle column with respect to sunlight and/or shadow. Also, the heat protection device may allow an exchange of information between vehicles parked in a specific area that would enable, as a group of thermally-aware entities, to share the available parking space, thereby accommodating a necessity for thermal balance.

According to an embodiment of the invention, the sensor arrangement comprises a sensor dome, wherein the first temperature sensor and the second temperature sensor are arranged at the sensor dome. Arranging the first and second temperature sensor at the dome may reduce an overall size of the entire sensor arrangement and may reduce an effort for mounting the sensor arrangement to the vehicle. The sensor dome may also comprise a plurality of light sensors.

According to an embodiment of the invention, the sensor arrangement further comprises a first light sensor and a second light sensor each configured to detect a light intensity, wherein the control device is configured to determine the maneuver based on a first light intensity value of the first light sensor and a second light intensity value of the second light sensor. By means of the first and second light sensor environmental lighting that could impact parked vehicles may be determined. Further, a precision of the maneuver may be increased by taking the first and second light intensity values into account. Apart from that, by means of the first and second light sensors e.g. a sunlight advancement during a day may be determined more precisely. According to a second aspect of the invention, a vehicle comprising a heat protection device as described above and in the following is provided.

According to a third aspect of the invention, a method for displacing a parked vehicle is provided.

It has to be understood that features of the heat protection device as described above and in the following may be features of the vehicle and/or the method as described above and in the following. Vice versa, features of the vehicle and/or the method as described above and in the following may be features of the heat protection device as described above and in the following.

The method for displacing a parked vehicle comprises the step of determining a first temperature value at a first location of the vehicle and a second temperature value at a second location of the vehicle. Further, the method comprises the step of determining a temperature difference of the first temperature value and the second temperature value and a temperature distribution over an outer surface of the vehicle based on the first temperature value and the second temperature value. Moreover, the method comprises the step of determining a displacement maneuver for displacing the parked vehicle based on the determined temperature distribution in order to reduce the temperature difference and displacing the vehicle (100) by performing the determined displacement maneuver.

According to an embodiment not being part of the invention, the method further comprises the step of transmitting data associated with the maneuver to a further vehicle and instructing the further vehicle to perform the maneuver. Alternatively or additionally the maneuver is determined taking navigation data of a navigation device of the vehicle into account. The navigation data may for instance comprise geographical coordinates, which may indicate a parking lot and/or a parking space near the vehicle. Apart from that, the navigation data may comprise a digital map of a vicinity of the vehicle including e.g. buildings and/or other obstacles, behind which the vehicle may be parked in shadow in order to reduce the average temperature of the vehicle.

### Brief description of the drawings

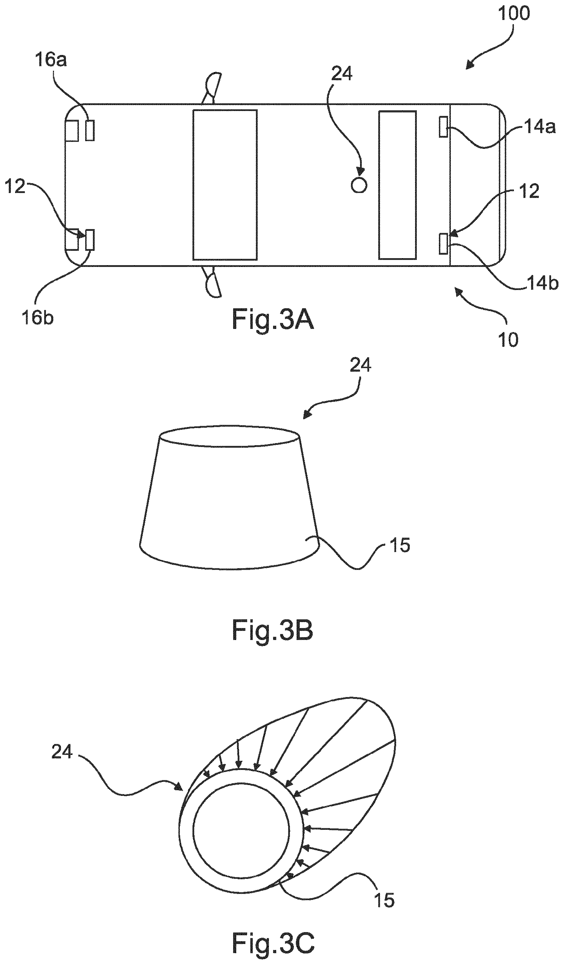

Fig. 1 schematically shows a heat protection device according to an exemplary embodiment.
Fig. 2A schematically shows a side view of a vehicle according to an exemplary embodiment.
Fig. 2B schematically shows a top view of the vehicle of Fig. 2A.
Fig. 3A schematically shows a top view of a vehicle according to an exemplary embodiment.
Figs. 3B and 3C
   each show a detailed view of a part of the vehicle of Fig. 3A.
Figs. 4A to 4D
   each illustrate a function of the heat protection device according to an embodiment of the invention.

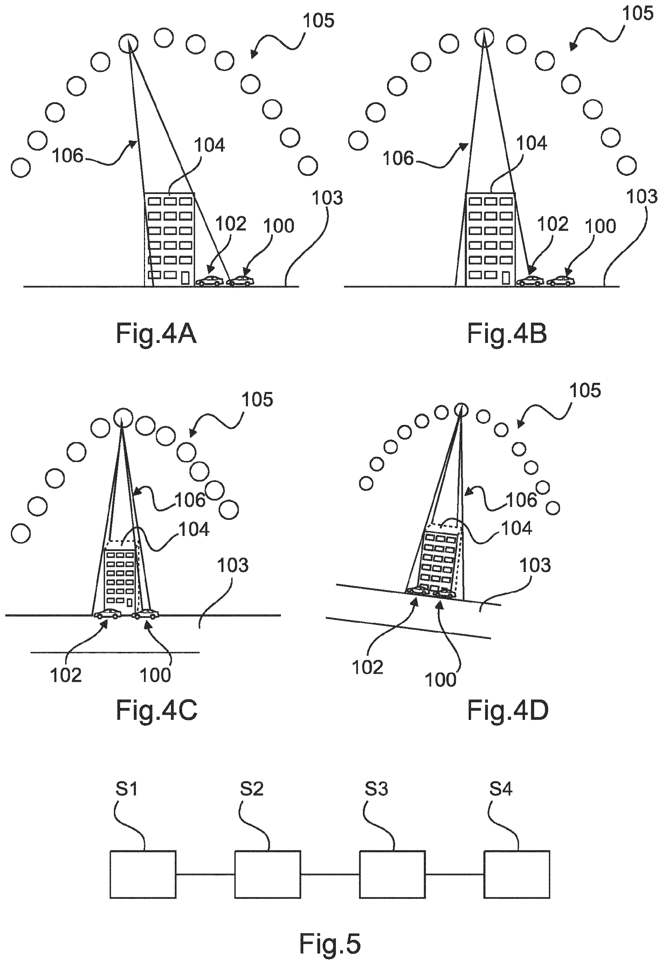

Fig. 5 shows a flow chart illustrating steps of a method for displacing a parked vehicle according to an exemplary embodiment.

### Detailed description of exemplary embodiments

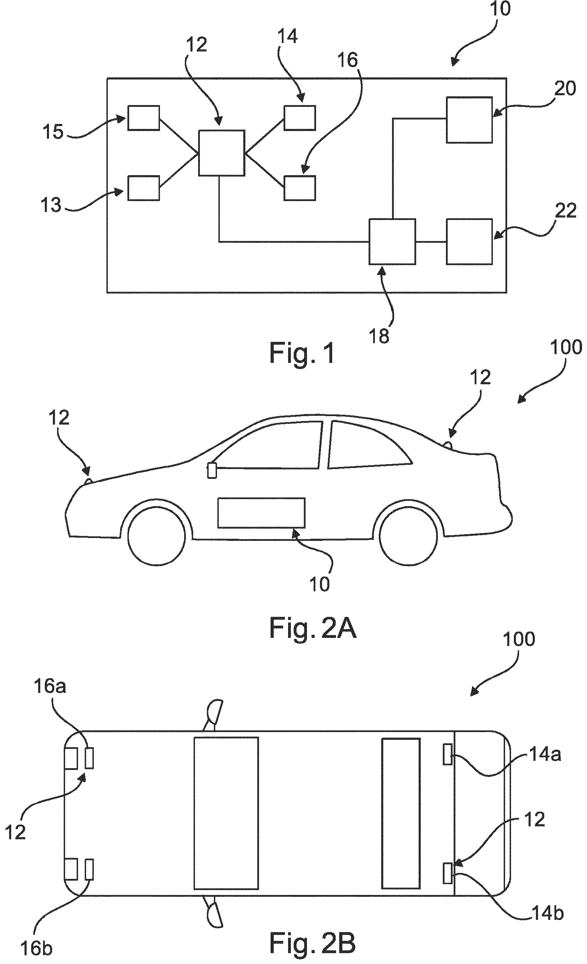

Fig. 1 schematically shows a heat protection device 10 for a parked and/or unmanned vehicle according to an exemplary embodiment of the invention.

The heat protection device 10 comprises a sensor arrangement 12 with a first temperature sensor 14 and a second temperature sensor 16. The first and second temperature sensors 14, 16 may each refer to a thermal sensor. The first temperature sensor 14 is configured to determine a first temperature value at a first location of a vehicle and the second temperature sensor is configured to determine a second temperature value at a second location of the vehicle (the vehicle is e.g. shown in Figs. 2A and 2B). However, the sensor arrangement may comprise more than two temperature sensors 14, 16.

The heat protection device 10 further comprises a control device 18 configured to receive, evaluate and/or process temperature values of the sensor arrangement 12. Particularly, the control device 18 is configured to determine a temperature difference based on the first temperature value of the first temperature sensor 14 and the second temperature value of the second temperature sensor 16. Based on the temperature difference, the control device 18 is further configured to determine a displacement maneuver, which e.g. comprises a direction and/or a distance by which the parked vehicle is to be moved in order to reduce and/or compensate the temperature difference. Further, the control device 18 may be configured to determine the maneuver such that an average temperature of the vehicle is reduced, which may particularly be advantageous during summertime, or such that the average temperature of the vehicle is increased, which may particularly be advantageous during wintertime.

Moreover, the control device 18 is configured to perform the maneuver and/or to automatically displace the vehicle according to the determined maneuver. This may inter alia comprise triggering an acoustic and/or visual warning signal, starting an engine of the vehicle and/or stopping the engine of the vehicle after displacement of the vehicle.

The heat protection device 10 further comprises a communication device 20, such as a vehicle-to-vehicle or an inter-vehicle communication device, for communicating with a further vehicle. The control device 18 is configured to transmit data associated with the determined maneuver via the communication device 20 to a further vehicle and/or instruct the further vehicle to perform the maneuver, as described in more detail above and in the following.

In order to determine the maneuver more precisely, particularly a direction in which the vehicle is to be moved, the heat protection device 10 and/or the sensor arrangement 12 may further comprise a first light sensor 13 and a second light sensor 15, each configured to detect a light intensity. The control device 18 is configured to determine the maneuver based on a first light intensity value of the first light sensor 13 and a second light intensity value of the second light sensor 15. However, the sensor arrangement may comprise more than two light sensors 13, 15.

Moreover, the heat protection device 10 comprises a navigation device 22 for providing navigation data, which may also be taken into account for determining the maneuver. The navigation data may comprise geographical coordinates, information about free parking spaces in the vicinity of the vehicle and/or about obstacles such as buildings. Also street directions may be included in the navigation data. The navigation data may further be taken into account when the maneuver is actually performed.

Generally, navigation support by means of the navigation device 22 is optional. However, by means of the navigation device 22 the heat protection device 10 may be able to recommend to the driver parking places on the streets with preferable orientation, e.g. with respect to cardinal directions. By way of example, if the driver wants to park on a north-south street, a right side of the street facing north may be suggested by the navigation device as parking location and a parking spot west of buildings, trees and/or other obstacles may be chosen during morning times. On a north-south street, a left side of the street facing north may be suggested, such that a parking spot east of obstacles may be chosen in the afternoon. Further, on an east-west street, the left side of the street facing east may be suggested such that a parking spot north of the obstacles may be chosen in the northern hemisphere. On an east-west street, the right side of the street facing east may be suggested such that a parking spot south of the obstacles may be chosen in the southern hemisphere.

In the following, further features as well as a function of the heat protection device 10 are described. E.g. during summertime, a driver of a vehicle may look for a shady place for parking the vehicle. However, the driver may not be aware about an evolution of the Sun's position and may not anticipate precisely how advantageous a certain parking location may be in terms of a sunlight impact over the duration of the parking. With longer parking times, e.g. during a work day, the position of e.g. a building's shadow changes according to the evolution of the Sun caused by the Earth's rotation and the vehicle may become undesirably exposed to sunlight. By means of the heat protection device 10 and/or the sensor arrangement 12 a thermal impact of the sunlight on the vehicle is monitored. The control device 18 is receiving and/or reading temperature values of the sensor arrangement 12 with the first and second temperature sensors 14, 16, respectively, which sensors 14, 16 may be placed conveniently on the vehicle. The control device 18 may continuously or in discrete time intervals process and/or evaluate the first and second temperature values and determine the temperature difference based thereon.

As soon as one of the first and second sensors 14, 16 is impacted by direct sunlight, the difference in the temperature values, i.e. the temperature difference, may become consistent, enabling the control device 18 to perceive and/or determine that the vehicle is critically impacted by sunlight. A gradient of temperature may be computed by the control device 18 by means of extrapolation and/or interpolation of the first and second temperature values over at least a part of an entire surface of the vehicle, mainly in regions of the surface arranged between the first and the second temperature sensor 14, 16. Such an extrapolated virtual temperature mesh may enable the control device 18 to determine a direction of a shadow retreat and/or sunlight advancement with respect to the parking position of the vehicle. Further, a speed of a temperature shift with respect to time may enable the control device 18 to evaluate and/or decide, based on predefined criteria, if the current vehicle's position is no longer appropriate from a thermal point of view or if the position may soon become inappropriate.

By way of example, during summer a vehicle may be parked at 8:00 am facing east in a parking spot next to the right sidewalk of a street with east-west orientation in the northern hemisphere. The parking spot was chosen by the driver in the shadow of a 20 m high building. The driver would return at 5:45 pm in the after-noon to the parking spot. A shadow position of the building has substantially changed during the day, such that a rear part of the vehicle may become impacted by direct sunlight at about 11:50 am. The control device 18 detects that the first temperature sensor 14, which is arranged at a rear part of the vehicle provides temperature values consistently higher than the second temperature sensor 16, which is arranged at the front of the vehicle. Further, the control device 18 may determine a temperature difference of the values and may detect that a gradient of the first and second temperature values increase with time. The control device 18 may then assess that the vehicle may become fully exposed to sunlight and it may also assess the direction of sunlight advancement, from the rear to the front of the vehicle. The control device 18 may then determine the displacement maneuver in order to move the vehicle away from the advancing sunlight, if another parking place is available. In this particular exemplary case, another parking spot placed in front of the vehicle may be considered to be preferred from the thermal point of view. How beneficial moving directly to the front or to the rear actually may be, may be assessed by the control device 18. The control device 18 may further integrate and/or utilize information and/or data from proximity sensors of the vehicle in order to detect potential obstacles in the desired, future parking position. If the future parking position is not accessible due to obstacles, such as e.g. other vehicles, pedestrians or the like, the control device 18 may not perform the maneuver. Instead, the control device 18 may repeat the process of determining a maneuver and/or a check for a future parking space may again be performed after a predefined time lapse. If the desired future parking position, e.g. in front of the current position, is assessed and/or determined available, the control device 18 may bring up a visual and/or acoustic warning signal, such as an emergency light or a bleeping of a parking warning, and may wake up the engine of the vehicle, drive the vehicle toward the future position, and may finally stop the engine and/or the warning signal.

During performing the maneuver, the control device 18 may supervise a movement of the vehicle over a predefined length and/or distance. Further, the control device 18 may take into account a time of the day and may predict a speed of the sunlight advancement. Alternatively or additionally the control device 18 may supervise the movement over a distance ranging from a predefined lower to a predefined higher threshold, which may conditionally be limited by a potential detection of light intensity, e.g. by means of the first and second light sensors 13, 15. After a new parking position of the vehicle is reached, the heat protection device 10 may continue monitoring temperature values of the sensor arrangement 12 and may later decide for another iteration in terms of determining and/or performing a further maneuver.

Fig. 2A schematically shows a side view of a vehicle 100 with a heat protection device 10 according to an exemplary embodiment. Fig. 2B schematically shows a top view of the vehicle 100 of Fig. 2A. If not stated otherwise, the heat protection device 10 of Fig. 2A comprises the same features and elements as the heat protection device 10 of Fig. 1.

The heat protection device 10 and/or the sensor arrangement 12 of Figs. 2A and 2B comprises in total four temperature sensors 14a, 14b, 16a, 16b. However, the heat protection device 10 may basically comprise an arbitrary number of temperature sensors.

Generally, the temperature sensors 14a, 14b, 16a, 16b may be disposed and/or arranged on the vehicle 100 such that they are impacted as much as possible by sunlight, either directly or indirectly. Further, the sensors 14a, 14b, 16a, 16b may be arranged on the vehicle 100 such that also a perimeter of the vehicle 100 can be mapped in terms of detecting and/or measuring temperature values near the perimeter. For this purpose, the temperature sensors 14a, 14b, 16a, 16b shown in Figs. 2A and 2B are placed and/or arranged on an outer surface of the vehicle 100, such as on a surface of a body of the vehicle 100. Two of the sensors 14a, 14b are arranged in a rear part of the vehicle 100 on a roof of the vehicle 100 in two opposite corners of the roof as shown in Fig. 2B. The other two sensors 16a, 16b are arranged in a front part of the vehicle 100 at a hood of the vehicle 100 in two opposite corners of the hood. These sensors 14a, 14b, 16a, 16b may be supplemented and/or replaced by respective light sensors. The positioning of the temperature sensors 14a, 14b, 16a, 16b allows to precisely determine temperature differences between a left side and a right side of the vehicle 100 as well as between a front part and a rear part of the vehicle 100.

However, the temperature sensors 14a, 14b, 16a, 16b may also be arranged and/or positioned beneath a sheet metal of the vehicle's body, such that they may not be affected by rain or dirt and such that they may not affect aerodynamics of the vehicle 100. Such arrangement of the sensors 14a, 14b, 16a, 16b may at the same time allow to quickly sense any shifts in temperature.

By means of the temperature sensors 14a, 14b, 16a, 16b and the control device 18 the heat protection device 10 is configured to start monitoring the temperature over the entire perimeter of the vehicle 100 when the vehicle 100 is parked. Particularly, the temperature is monitored in the four corners of the vehicle 100 as shown in Fig. 2B.

Fig. 3A schematically shows a top view of a vehicle 100 with a heat protection device 10 according to an exemplary embodiment. Figs. 3B and 3C each show a detailed view of a part of the vehicle 100 of Fig. 3A. If not stated otherwise, the heat protection device 10 of Figs. 3A to 3C comprises the same features and elements as the heat protection device 10 of previous Figures.

The heat protection device 10 of Figs. 3A to 3C comprises a sensor dome 24 arranged in the rear part of the vehicle 100 on the roof. The sensor dome 24 may be part of the sensor arrangement 12 and may be arranged e.g. at a base of an antenna of vehicle 100. Other advantageous positioning of the sensor dome 24 are however possible, as for instance in sunlit areas inside the vehicle, such that it may not be affected by rain or dirt and such that it may not affect aerodynamics of the vehicle 100. Fig. 3B shows a perspective detailed view of the sensor dome 24 and Fig. 3C shows a detailed top view of the sensor dome 24. By means of the sensor dome 24 a direction of sunlight impinging onto the vehicle 100 as well as a detection of a shadow retreat and/or sunlight advancement with respect to a parking position of the vehicle 100 can be improved by use of a plurality light sensors 15. The plurality of light sensors 15 may be considered as sensor batteries arranged in a sunlight exposed outer location of the vehicle 100. One or several such sensor batteries may be used.

The light sensors 15 shown in Figs. 3B and 3C are arranged in a radial array on the sensor dome 24, which may have a cylindrical and/or tapered shape. However, also other shapes may be used. The sensor dome 24 may have at least three sensing points, i.e. the plurality of light sensors 15 may comprise at least three independent light sensors 15 arranged on the sensor dome 24. This may allow to precisely determine a direction of sunlight impinging onto the vehicle 100 and/or a shadow retreatment over time. By way of example, sunlight may impinge onto the vehicle 100 from the rear right-hand side of the vehicle at a skew angle. Each of the plurality of light sensors 15 may detect different light intensity values, which are represented by the arrows in Fig. 3C, which represent interpolated values of a light intensity (or a graphical representation thereof) ranging from highest to lowest values. These interpolated light intensity values may be computed by the control device 18 and may be considered as sunlight advancement direction. This enables the heat protection device 10 to precisely determine the direction of sunlight and thus to precisely determine a displacement maneuver for the vehicle 100.

Figs. 4A to 4D each illustrate a function of the heat protection device 10 employed in a vehicle 100 and a further vehicle 102 according to an embodiment of the invention. If not stated otherwise, the vehicles 100, 102 and the heat protection devices 10 employed therein comprise the same features and elements as the heat protection devices 10 and/or the vehicles 100 described in previous figures.

As shown in Figs. 4A, 4B vehicle 100 is parked behind a further vehicle 102 on the right side of a street 103 near a building 104. The advancement of the Sun as well as positions of the Sun at different times during the day are indicated by in total thirteen circles 105. From the left to the right, each of the circles corresponds to a specific time of the day. By way of example, the circles 105 from left to right correspond to 5:45 am, 7:00 am, 8:00 am, 9:30 am, 11:15 am, 11:50 am, 12:00 pm, 12:10 pm, 12:45 pm, 14:30 pm, 16:00 pm, 17:00 pm, and 18:15 pm.

Further, in each of Figs. 4A to 4C a shadow 106 from a building 104 is indicated for a specific position of the Sun at a specific time. Fig. 4A shows the shadow 106 at 11:50 am and Figs. 4B to 4C show the shadow at 12:00 pm.

A function of the heat protection device 10 as illustrated in Figs. 4A to 4C is described in following. At 8:00 am vehicle 100 and the further vehicle 102 may be parked in the shadow 106 of building 104 close to each other. During the day the shadow 106 advances according to the Earth's rotation. Around 11:50 am, as shown in Fig. 4A, the rear part of vehicle 100 is irradiated by sunlight and a temperature of the rear part starts to increase. Thus, the temperature sensors 14a, 14b (see Fig. 2A) detect an intensification of sunlight and a temperature increase. The heat protection device 10 and/or the control device 18 may determine the direction of sunlight advancement by monitoring the temperature values from all sensors 14a, 14b, 16a, 16b of the sensor arrangement 12. The determined direction of sunlight advancement may be compared to a general street direction, which may e.g. known from the navigation device 22. The heat protection device 10 may then determine a temperature difference between the rear sensors 14a, 14b and the front sensors 16a, 16b and based on the temperature difference decide to attempt a change of a parking position, i.e. a displacement maneuver, in order to avoid further exposure to direct sunlight. However, proximity sensors of the vehicle 100 may detect an obstacle in the front such as the further vehicle 102. Accordingly, a change of the parking position and/or performing the maneuver may not be possible. After a predefined time the heat protection device 10 may again check for obstacles by means of the proximity sensors.

As shown in Fig. 4B, at 12:00 pm also the rear part of the further vehicle 102 is exposed to direct sunlight and a temperature at the rear part of vehicle 102 starts to increase. On the other hand, vehicle 100 is entirely exposed to sunlight and all temperature sensors 14a, 14b, 16a, 16b detect rather high temperature values.

As described above, now the heat protection device 10 of vehicle 102 detects intensification of sunlight through the respective rear sensors 14a, 14b and may assess the direction of sunlight advancement, compare it to a general street direction, and may decide to attempt a change of parking position to avoid direct sunlight, i.e. the heat protection device 10 may determine a displacement maneuver. The proximity sensors of vehicle 102 detect no obstacles in front of the further vehicle 102 and the displacement maneuver is performed fully automatically, thereby changing the parking position, as shown in Fig. 4C.

After the further vehicle 102 has performed the displacement maneuver, also the rear vehicle 100 can finally perform the displacement maneuver as shown in Fig. 4D, where the vehicle 102 has advanced over to the limit of sunlight and vehicle 100 has advanced over to the farthermost available parking position and farthermost from the advancing sunlight.

In the same manner both vehicles 100, 102 may change their position by performing further displacement maneuvers.

In the following, a further example is described, wherein the vehicles 100 and 102 and the respective heat protection devices 10 of the vehicles 100, 102 each comprise a communication device 20 for inter-vehicle communication. This way, the parked vehicles 100, 102 are able to communicate an intention to move to another parking spot and/or an intention to perform a displacement maneuver. In case the intended parking position of vehicle 100 is occupied by the further vehicle 102 as shown in Figs. 4A and 4B. After determining the displacement maneuver and detecting blockage of the way of vehicle 100 by vehicle 102, the control device 18 of vehicle 100 communicates data associated with the displacement maneuver via the communication device 20 to the further vehicle 102. Vehicle 102 in turn may assess the possibility to change its position by performing a displacement maneuver, despite the fact that sunlight is not the trigger, but rather a request received from vehicle 100 requesting assistance. Provided the movement of vehicle 102 is possible, a more suitable parking position is made available to vehicle 100 which is already affected by sunlight. Such cooperation model of a plurality of vehicles 100, 102 may be extended to an entire parked vehicle column with an arbitrary number of vehicles 100, 102.

Fig. 5 shows a flow chart illustrating steps of a method for displacing a parked vehicle 100 according to an exemplary embodiment.

In a first step a first temperature value at a first location of the vehicle 100 and a second temperature value at a second location of the vehicle 100 are determined. In a second step S2 a temperature difference of the first temperature value and the second temperature value is determined. In a further step S3 a displacement maneuver for displacing the parked vehicle 100 in order to reduce the temperature difference is determined. Finally, in a step S4 the vehicle 100 is displaced by performing the determined displacement maneuver.

Optionally, data associated with the maneuver may be transmitted to a further vehicle 102 and the further vehicle 102 may be instructed and/or requested to perform the maneuver.

## Claims

1. A heat protection device (10) for a parked vehicle (100), comprising:
a sensor arrangement (12) with a first temperature sensor (14) and a second temperature sensor (16); and
a control device (18);
wherein the first temperature sensor (14) is configured to determine a first temperature value at a first location of the vehicle (100),
the second temperature sensor (16) is configured to determine a second temperature value at a second location of the vehicle (100);
wherein the control device (18) is configured to determine a temperature difference based on the first temperature value and the second temperature value,
**characterized in that**
the control device (18) is further configured to determine a temperature distribution over an outer surface of the vehicle (100) based on the first temperature value and the second temperature value;
and
wherein the control device (18) is configured to determine a displacement maneuver for displacing the parked vehicle (100) based on the determined temperature distribution, in order to reduce the determined temperature difference and to automatically displace the vehicle (100) according to the determined displacement maneuver.

2. The heat protection device (10) according to claim 1,
wherein the maneuver is determined such that an average temperature of the vehicle is increased or reduced.

3. The heat protection device (10) according to one of the preceding claims, further comprising:
a communication device (20) for communicating with a further vehicle (102),
wherein the control device (18) is configured to transmit data associated with the maneuver to the further vehicle (102) via the communication device (20).

4. The heat detection device (10) according to one of the preceding claims,
wherein the sensor arrangement (12) comprises a sensor dome (24),
wherein the first temperature sensor (14) and the second temperature sensor (16) are arranged at the sensor dome (24).

5. The heat protection device (10) according to one of the preceding claims,
wherein the sensor arrangement (12) further comprises a first light sensor (13) and a second light sensor (15) each configured to detect a light intensity,
wherein the control device (18) is configured to determine the maneuver based on a first light intensity value of the first light sensor (13) and a second light intensity value of the second light sensor (15).

6. A vehicle (100) comprising a heat protection device (10) according to one of the preceding claims.

7. A method for displacing a parked vehicle (100), the method comprising:
determining a first temperature value at a first location of the vehicle (100) and a second temperature value at a second location of the vehicle (100),
determining a temperature difference of the first temperature value and the second temperature value,
**characterized in that** the method further comprises:
determining a temperature distribution over an outer surface of the vehicle (100) based on the first temperature value and the second temperature value;
determining a displacement maneuver for displacing the parked vehicle (100) based on the determined temperature distribution in order to reduce the temperature difference; and
displacing the vehicle (100) by performing the determined displacement maneuver.

## Patentansprüche

1. Wärmeschutzvorrichtung (10) für ein geparktes Fahrzeug (100), umfassend:
eine Sensoranordnung (12) mit einem ersten Temperatursensor (14) und einem zweiten Temperatursensor (16); und
eine Steuervorrichtung (18);
wobei der erste Temperatursensor (14) ausgelegt ist, einen ersten Temperaturwert an einer ersten Stelle des Fahrzeugs (100) zu bestimmen,
wobei der zweite Temperatursensor (16) ausgelegt ist, einen zweiten Temperaturwert an einer zweiten Stelle des Fahrzeugs (100) zu bestimmen;
wobei die Steuereinheit (18) ausgelegt ist, eine Temperaturdifferenz auf Grundlage des ersten Temperaturwerts und des zweiten Temperaturwerts zu bestimmen,
**dadurch gekennzeichnet, dass**
die Steuervorrichtung (18) ferner ausgelegt ist, eine Temperaturverteilung über eine Außenfläche des Fahrzeugs (100) auf Grundlage des ersten Temperaturwerts und des zweiten Temperaturwerts zu bestimmen;
und
wobei die Steuervorrichtung (18) ausgelegt ist, ein Versetzungsmanöver zum Versetzen des geparkten Fahrzeugs (100) auf Grundlage der bestimmten Temperaturverteilung zu bestimmen, um die bestimmte Temperaturdifferenz zu reduzieren und um das Fahrzeug (100) gemäß dem bestimmten Versetzungsmanöver automatisch zu versetzen.

2. Wärmeschutzvorrichtung (10) nach Anspruch 1,
wobei das Manöver derart bestimmt wird, dass eine Durchschnittstemperatur des Fahrzeugs erhöht oder reduziert wird.

3. Wärmeschutzvorrichtung (10) nach einem der vorhergehenden Ansprüche, ferner umfassend:
eine Kommunikationsvorrichtung (20) zum Kommunizieren mit einem weiteren Fahrzeug (102),
wobei die Steuervorrichtung (18) ausgelegt ist, Daten in Zusammenhang mit dem Manöver an das weitere Fahrzeug (102) über die Kommunikationsvorrichtung (20) zu übertragen.

4. Wärmedetektionsvorrichtung (10) nach einem der vorhergehenden Ansprüche,
wobei die Sensoranordnung (12) eine Sensorkuppel (24) umfasst, wobei der erste Temperatursensor (14) und der zweite Temperatursensor (16) an der Sensorkuppel (24) angeordnet sind.

5. Wärmeschutzvorrichtung (10) nach einem der vorhergehenden Ansprüche,
wobei die Sensoranordnung (12) ferner einen ersten Lichtsensor (13) und einen zweiten Lichtsensor (15) umfasst, die jeweils ausgelegt sind, eine Lichtintensität zu detektieren,
wobei die Steuervorrichtung (18) ausgelegt ist, das Manöver auf Grundlage eines ersten Lichtintensitätswerts des ersten Lichtsensors (13) und eines zweiten Lichtintensitätswerts des zweiten Lichtsensors (15) zu bestimmen.

6. Fahrzeug (100) umfassend eine Wärmeschutzvorrichtung (10) nach einem der vorhergehenden Ansprüche,

7. Verfahren zum Versetzen eines geparkten Fahrzeugs (100), wobei das Verfahren Folgendes umfasst:
Bestimmen eines ersten Temperaturwerts an einer ersten Stelle des Fahrzeugs (100) und eines zweiten Temperaturwerts an einer zweiten Stelle des Fahrzeugs (100),
Bestimmen einer Temperaturdifferenz des ersten Temperaturwerts und des zweiten Temperaturwerts,
**dadurch gekennzeichnet, dass** das Verfahren ferner umfasst:
Bestimmen einer Temperaturverteilung über eine Außenfläche des Fahrzeugs (100) auf Grundlage des ersten Temperaturwerts und des zweiten Temperaturwerts;
Bestimmen eines Versetzungsmanövers zum Versetzen des geparkten Fahrzeugs (100) auf Grundlage der bestimmten Temperaturverteilung, um die Temperaturdifferenz zu reduzieren;
und
Versetzen des Fahrzeugs (100) durch Durchführen des bestimmten Versetzungsmanövers.

## Revendications

1. Dispositif de protection contre la chaleur (10) pour un véhicule garé (100), comprenant :
un agencement de capteurs (12) avec un premier capteur de température (14) et un deuxième capteur de température (16) ; et
un dispositif de contrôle (18) ;
dans lequel le premier capteur de température (14) est configuré pour déterminer une première valeur de température à un premier emplacement du véhicule (100),
le deuxième capteur de température (16) est configuré pour déterminer une deuxième valeur de température à un deuxième emplacement du véhicule (100) ;
dans lequel le dispositif de contrôle (18) est configuré pour déterminer une différence de température sur la base de la première valeur de température et de la deuxième valeur de température,
**caractérisé en ce que**
le dispositif de contrôle (18) est en outre configuré pour déterminer une distribution de température sur une surface externe du véhicule (100) sur la base de la première valeur de température et de la deuxième valeur de température ;
et
dans lequel le dispositif de contrôle (18) est configuré pour déterminer une manœuvre de déplacement pour déplacer le véhicule garé (100) sur la base de la distribution de température déterminée, afin de réduire la différence de température déterminée, et pour déplacer automatiquement le véhicule (100) en fonction de la manœuvre de déplacement déterminée.

2. Dispositif de protection contre la chaleur (10) selon la revendication 1, dans lequel la manœuvre est déterminée de telle sorte qu'une température moyenne du véhicule soit augmentée ou réduite.

3. Dispositif de protection contre la chaleur (10) selon l'une quelconque des revendications précédentes, comprenant en outre :
un dispositif de communication (20) pour communiquer avec un autre véhicule (102),
dans lequel le dispositif de contrôle (18) est configuré pour transmettre des données associées avec la manœuvre à l'autre véhicule (102) par le biais du dispositif de communication (20) .

4. Dispositif de détection de chaleur (10) selon l'une quelconque des revendications précédentes,
dans lequel l'agencement de capteurs (12) comprend un dôme de capteur (24),
dans lequel le premier capteur de température (14) et le deuxième capteur de température (16) sont agencés au niveau du dôme de capteur (24).

5. Dispositif de protection contre la chaleur (10) selon l'une quelconque des revendications précédentes,
dans lequel l'agencement de capteurs (12) comprend en outre un premier capteur de lumière (13) et un deuxième capteur de lumière (15) chacun configurés pour détecter une intensité de lumière,
dans lequel le dispositif de contrôle (18) est configuré pour déterminer la manœuvre sur la base d'une première valeur d'intensité de lumière du premier capteur de lumière (13) et d'une deuxième valeur d'intensité de lumière du deuxième capteur de lumière (15).

6. Véhicule (100) comprenant un dispositif de protection contre la chaleur (10) selon l'une quelconque des revendications précédentes.

7. Procédé de déplacement d'un véhicule garé (100), le procédé comprenant :
la détermination d'une première valeur de température à un premier emplacement du véhicule (100) et d'une deuxième valeur de température à un deuxième emplacement du véhicule (100),
la détermination d'une différence de température de la première valeur de température et de la deuxième valeur de température,
**caractérisé en ce que** le procédé comprend en outre :
la détermination d'une distribution de température sur une surface externe du véhicule (100) sur la base de la première valeur de température et de la deuxième valeur de température ;
la détermination d'une manœuvre de déplacement pour déplacer le véhicule garé (100) sur la base de la distribution de température déterminée afin de réduire la différence de température ; et
le déplacement du véhicule (100) par réalisation de la manœuvre de déplacement déterminée.
